# EUROPÄISCHE PATENTSCHRIFT

(11) **EP 2 425 702 B1**
(45) Veröffentlichungstag und Bekanntmachung des Hinweises auf die Patenterteilung: **14.01.2015**
(21) Anmeldenummer: 11169717.3
(22) Anmeldetag: 14.06.2011
(51) Int. Cl.: A01D 75/28

(54) **Mähdrescher**
Combine harvester
Moissonneuse-batteuse

(30) Priorität: 03.09.2010 DE 102010037304
(43) Veröffentlichungstag der Anmeldung: 07.03.2012
(73) Patentinhaber: CLAAS Selbstfahrende Erntemaschinen GmbH, 33428 Harsewinkel (DE)
(72) Erfinder: Schwersmann, Berthold, Omaha, 68127 (US); Holtmann, Bernd, 48324 Sendenhorst (DE); Beulke, Christian, 37589 Echte (DE)

(56) Entgegenhaltungen:
- WO-A1-94/15450
- DE-A1- 2 454 315
- DE-A1- 2 853 700
- US-A- 2 893 558
- US-A- 2 989 183
- US-A- 3 581 746

## Beschreibung

Die Erfindung betrifft einen Mähdrescher gemäß dem Oberbegriff des Anspruches 1.

Der Betrieb eines Mähdreschers in Hanglage führt zu einer einseitigen Auslastung von Arbeitsorganen mit dem aufgenommenen Erntegut innerhalb des Mähdreschers, wodurch die Qualität der von den verschiedenen Arbeitsorganen auszuführenden Prozesse negativ beeinflusst wird. Insbesondere in der Reinigungsvorrichtung führt die ungleichmäßige Beschickung mit Erntegut zu einem signifikanten Ansteigen der Reinigungsverluste. Der von einer Abscheidevorrichtung abgegebene Erntegutstrom wird einem Rücklaufboden übergeben, von dem das Erntegut der ein oder mehrere Siebe umfassenden Reinigungsvorrichtung zugeführt wird.

Aus der US 3,581,746 ist es bekannt, zur das von der Abscheidevorrichtung an den Rücklaufboden übergebene Erntegut vor dessen Zuführung auf die Siebe der Reinigungsvorrichtung von einer dem Rücklaufboden zugeordneten Fördereinrichtung in Querrichtung zu verteilen. Dabei wird die Förderrichtung der Fördereinrichtung in Abhängigkeit von der Seitenneigung des Mähdreschers eingestellt. Die aus der US 3,581,746 bekannte Lösung lässt lediglich die Einstellung der Förderrichtung zu, wodurch die Fördereinrichtung bei einer einseitigen Belastung des Rücklaufbodens in Folge der Seitenneigung das Erntegut entsprechend des Verlaufes der Schichthöhe von der talwärts gerichteten Seite in Richtung der Mitte des Rücklaufbodens vergleichmäßigt. Mit abnehmender Schichthöhe nimmt die Fördermenge auf der gegenüberliegenden Seite ab, so dass auf dieser Seite die Auslastung der Reinigungsvorrichtung immer noch deutlich unter der in der Ebene liegt.

Die DE 24 54 315 A1 beschreibt einen Mähdrescher mit einem Schüttlerrücklauf, einer Siebeinrichtung und einer dazwischen angeordneten, als endlos umlaufendes Band ausgeführten Querfördereinrichtung, deren Förderrichtung und Fördergeschwindigkeit in Abhängigkeit von der Mähdrescherneigung oder der neigungsbedingten Gutverteilung umsteuerbar ist. Die Querfördereinrichtung erstreckt sich über die gesamte Breite der Siebeinrichtung, so dass eine partielle Beeinflussung des von dem Schüttlerrücklauf abgegebenen Erntegutes nicht möglich ist.

Der Erfindung liegt die Aufgabe zu Grunde, einen Mähdrescher derart weiterzubilden, dass eine gezielte Vergleichmäßigung des einer Reinigungsvorrichtung zuzuführenden Erntegutes über deren gesamte Breite ermöglicht wird.

Diese Aufgabe wird erfindungsgemäß durch die kennzeichnenden Merkmale des Patentanspruches 1 gelöst.

Vorteilhafte Weiterentwicklungen und Ausgestaltungen sind Gegenstand der jeweiligen Unteransprüche.

Gemäß dem Anspruch 1 wird ein Mähdrescher mit einer Abscheidevorrichtung und einer Reinigungseinrichtung sowie einem sich an die Abscheidevorrichtung anschließenden, quer zur Fahrtrichtung erstreckenden Rücklaufboden, dem eine Fördereinrichtung zugeordnet ist, welche ein von der Abscheidevorrichtung auf den Rücklaufboden abgegebenes Erntegut vor der Abgabe an die Reinigungseinrichtung quer zur Fahrtrichtung verteilt, wobei die Fördermenge des von der Fördereinrichtung verteilten Erntegutes in Abhängigkeit von Betriebsparametern des Mähdreschers, welche die Qualität des Reinigungsprozesses beeinflussen, veränderbar ist, dadurch gekennzeichnet, dass die Fördereinrichtung in Abhängigkeit von einem Seitenneigungswinkel des Mähdreschers relativ zu dem Rücklaufboden in Bezug auf eine zu dem Rücklaufboden senkrechte Achse partiell positionsveränderlich angeordnet ist, vorgeschlagen. Dies ermöglicht eine partielle Variation des Abstandes der Fördereinrichtung zu dem Rücklaufboden, so dass die Fördereinrichtung auf der talwärts geneigten Seite des Mähdreschers, auf der die Schichthöhe im Allgemeinen größer ist, abschnittsweise einen geringeren Abstand zur Vorderkante des Rücklaufbodens aufweist.

Ebenso kann die Fördereinrichtung in Bezug auf eine senkrechte Achse in der Mitte des Rücklaufbodens positionsveränderlich sein, so dass die Fördereinrichtung in zumindest zwei Abschnitte unterteilt ist, welche jeweils unabhängig voneinander um die senkrechte Achse in einem gemeinsamen Drehpunkt verschwenkbar sind. Dies könnte durch ein Kreuzgelenk oder dergleichen realisiert werden. Durch die Variation der Fördermenge wird eine gleichmäßigere Beschickung der Reinigungsvorrichtung über die gesamte Breite erreicht, wodurch die Reinigungsverluste gegenüber der aus dem Stand der Technik bekannten Lösung weiter gesenkt werden können.

Die Fördereinrichtung ist in Abhängigkeit des Seitenneigungswinkels relativ zu dem Rücklaufboden positionsveränderbar angeordnet. Auf diese Weise kann die Fördereinrichtung gezielt mit dem Erntegut in Verbindung gebracht werden, um eine gleichmäßigere Schichthöhe über die gesamte Breite der Reinigungsvorrichtung zu erreichen. Durch die positionsveränderliche Fördereinrichtung kann flexibel auf sich ändernde Situationen während des Erntevorganges reagiert werden.

Hierzu kann die Fördereinrichtung in Bezug auf eine zu dem Rücklauflaufboden parallele Achse positionsveränderlich sein, so dass eine Variation des Abstandes zum Rücklaufboden eine Überführung der Fördereinrichtung von einer Hangposition, in der sich der Mähdrescher in einer Hanglage befindet und in der die Fördereinrichtung mit dem Erntegut in Kontakt steht, in eine Ebenenposition überführbar ist, in der die Fördereinrichtung mit dem Erntegut auf dem Rücklaufboden außer Eingriff steht. Der Übergang zwischen den beiden Positionen kann dabei entsprechend der Veränderung der Seiteneigung des Mähdreschers erfolgen, so dass bei einem Übergang während der Erntefahrt von einem ebenen Gelände hin zu einem unebenen Geländetyp mit ansteigender Seitenneigung des Mähdreschers der Abstand zwischen der Fördereinrichtung und dem Rücklaufboden kontinuierlich reduziert wird.

Insbesondere kann die Drehrichtung der Fördereinrichtung in Abhängigkeit des Seitenneigungswinkels umkehrbar sein, wodurch einer sich ändernden Fahrtrichtung des Mähdreschers Rechnung getragen werden kann. Weiterhin kann die Geschwindigkeit der Fördereinrichtung in Abhängigkeit des Seitenneigungswinkels steuerbar sein, so dass die Fördermenge der Fördereinrichtung flexibel an variierende Erntegutmengen anpassbar ist.

In vorteilhafter Weiterbildung kann mindestens ein achsparallel zu der Längsachse der Fördereinrichtung angeordnetes Leitelement die Fördereinrichtung in radialer Richtung abschnittsweise umgeben. Das mindestens eine Leitelement unterstützt die Förderwirkung in axialer Richtung der Fördereinrichtung, indem ein frühzeitiges Austreten des Erntegutes aus der Fördereinrichtung vermieden wird.

Vorteilhafterweise kann das mindestens eine Leiteelement relativ zu dem Rücklaufboden positionsveränderbar sein. Dabei kann das mindestens eine Leitelement in axialer Richtung parallel zu der Fördereinrichtung und/oder in radialer Richtung positionsveränderbar ausgeführt sein. Dies lässt sich durch eine zu der Fördereinrichtung achsparallele Anordnung an einer Schwenkachse erreichen, welche eine unabhängige Veränderung der Position des mindestens einen Leitelementes erlaubt. Alternativ kann das mindestens eine Leitelement an der positionsveränderbaren Fördereinrichtung angeordnet sein.

In einer bevorzugten Weiterbildung kann die Fördereinrichtung von mindestens zwei Leitelementen abschnittsweise umgeben sein, die relativ zueinander verstellbar sind. Die Leitelemente lassen sich unabhängig voneinander in radialer Richtung verschwenken, so dass die mindestens zwei Leitelemente unterschiedliche radiale Abstände zu der Fördereinrichtung aufweisen können, und/oder derart in axialer Richtung verschieben, dass zwischen den zumindest zwei Leitelementen ein Abstand einstellbar ist.

Vorzugsweise kann die Fördereinrichtung als eine Förderschnecke ausgeführt sein.

Alternativ kann die Fördereinrichtung als ein Förderband ausgeführt sein. Hierzu ist vorgesehen, dass das Förderband abschnittsweise in sich verdrehbar ist, um den Abgabeort in Förderrichtung festlegen zu können. Mit zunehmender Neigung des in Förderrichtung verdrehten Förderbandes nimmt die Menge des an die Reinigungseinrichtung abgegebenen Erntegutes zu.

Die Erfindung wird nachstehend anhand eines in den Zeichnungen dargestellten Ausführungsbeispieles näher erläutert.

Es zeigen:
- Fig. 1: eine schematisierte Längsschnittdarstellung eines Mähdreschers;
- Fig. 2: eine schematisierte, perspektivische Ansicht eines Rücklaufbodens des Mähdreschers gemäß Fig. 1 mit einer Fördereinrichtung in Hanglage;
- Fig. 3: eine schematisierte, perspektivische Ansicht des Rücklaufbodens gemäß Fig. 2 mit einer Fördereinrichtung bei Fahrt des Mähdreschers in der Ebene;
- Fig. 4: eine schematisierte Seitenansicht einer zweiten Ausführungsform einer Fördereinrichtung gemäß Fig. 2 in Hanglage des Mähdreschers;
- Fig. 5: eine schematisierte Seitenansicht einer zweiten Ausführungsform einer Fördereinrichtung gemäß Fig. 4 bei Fahrt des Mähdreschers in der Ebene.

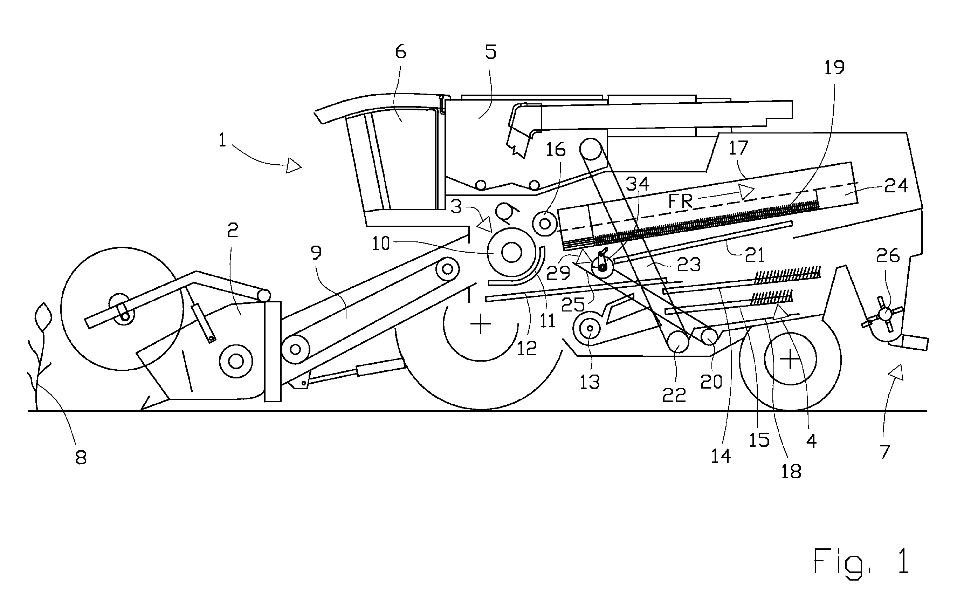

Der in Fig. 1 in schematisierter Längsschnittdarstellung gezeigte erfindungsgemäße Mähdrescher 1 trägt in seinem Frontbereich ein höhenverstellbares Schneidwerk 2, welches gewachsenes Erntegut 8 auf großer Breite aberntet und in seitlicher Richtung zusammenführt und an ein Schrägförderorgan 9 übergibt. Über das Schrägförderorgan 9 gelangt das Erntegut 8 in an sich bekannter Weise zu Dreschorganen 3, die in der Darstellung der Fig. 1 eine Dreschtrommel 10, eine dieser nachgeordnete Wendetrommel 16 und einen Dreschkorb 11 umfassen. Durch Öffnungen des Dreschkorbs 11 hindurch wird aus dem Erntegut 8 ein erster, im Wesentlichen aus Körnern, Kurzstroh und Spreu bestehender Erntegutstrom abgeschieden, der auf einen Vorbereitungsboden 12 fällt. Durch Rüttelbewegungen des Vorbereitungsbodens 12 wird der Erntegutstrom darauf nach hinten in Richtung einer Reinigungseinrichtung 4 gefördert.

Der nicht durch den Dreschkorb 11 hindurch getretene Teil des Erntegutstroms wird über die Wendetrommel 16 zu einem Axialrotor 17 weiterbefördert, der sich in Längsrichtung des Mähdreschers 1 erstreckt. Der Axialrotor 17 ist in seinem unteren Bereich von einem halbzylindrischen Sieb 19 umgeben, über das ein zweiter, im Wesentlichen aus Korn und Ährenbruchstücken bestehender Erntegutstrom abgeschieden wird, der auf einen Rücklaufboden 21 gelangt.

Anstelle eines einzelnen Axialrotors 17 könnten auch zwei Axialrotoren parallel nebeneinander vorgesehen sein. Alternativ kann anstelle einer nach dem Axialflussprinzip arbeitenden Abscheidevorrichtung auch ein Hordenschüttler als Abscheidevorrichtung zum Einsatz kommen.

Erntegut, im Wesentlichen Stroh, welches am rückwärtigen Ende 24 des Axialrotors 17 ausgeworfen wird, gelangt zu einem Verteiler 7 am Heck des Mähdreschers 1, wo es von einem Häcksler 26 zerkleinert und schließlich auf den Boden eines Feldes ausgebracht wird.

Auf dem rüttelnd bewegten Rücklaufboden 21 wird der zweite Erntegutstrom vorwärts gefördert und schließlich über eine Vorderkante 34 des Rücklaufbodens 21 an den Vorbereitungsboden 12 übergeben, wo er sich mit dem durch den Dreschkorb 11 hindurch getretenen Erntegutstrom vereinigt, der von dem Vorbereitungsboden 12 an die Reinigungsvorrichtung 4 abgegeben wird. Dem Rücklaufboden ist eine Fördereinrichtung 29 vorgeschaltet, die weiter unten im Detail erläutert wird.

Die Reinigungseinrichtung 4, der der vereinigte Erntegutstrom vom Vorbereitungsboden 12 zugeführt wird, umfasst ein Obersieb 14, ein Untersieb 15 und ein Gebläse 13, das einen über die Siebe 14, 15 streichenden Luftstrom erzeugt. Das in den vom Vorbereitungsboden 12 beziehungsweise Rücklaufboden 21 kommenden Erntegutströmen enthaltene Korn passiert nacheinander das Obersieb 14 sowie das Untersiebe 15 und erreicht über einen darunter liegenden Boden 18 eine Schneckenfördereinrichtung 22 und einen Kornelevator 23, der es in einen im Rücken der Fahrerkabine 6 angeordneten Korntank 5 fördert.

Anteile des Erntegutstroms, die leichter sind als das Korn, werden beim Herabfallen vom Vorbereitungsboden 12 auf das Obersieb 14, vom Obersieb 14 auf das Untersieb 15 oder vom Untersieb 15 auf den Boden 18 vom Luftstrom des Gebläses 13 erfasst und mitgerissen, erreichen den Verteiler 7 und werden über diesen ausgeschieden. Schwere, gröbere Anteile gelangen über eine Überkehr am rückwärtigen Ende der Siebe 14, 15 in einen unterhalb der Siebe 14, 15 quer verlaufenden Graben. Eine in dem Graben rotierende Schnecke 20 räumt das Material seitwärts zu einem Überkehrelevator 25, der es zurück zu den Dreschorganen 3 befördert.

Die Effektivität, mit der die leichten Bestandteile beim Herabfallen vom Korn getrennt werden, hängt von der Dichte des Erntegutstroms ab und ist bei gegebenem Durchsatz umso besser, je gleichmäßiger der Erntegutstrom über die Breite des Vorbereitungsbodens 12 beziehungsweise der Siebe 14, 15 der Reinigungseinrichtung 4 verteilt ist. In einem stromaufwärtigen Bereich des Rücklaufbodens 21 ist der Erntegutstrom über die Breite des Rücklaufbodens 21 hinweg nicht gleichmäßig verteilt, sondern liegt an den seitlichen Rändern des Rücklaufbodens 21, unterhalb der stark geneigten Bereiche der Mantelfläche des Siebes 19 des Axialrotors 17 dichter, als in der Mitte des Rücklaufbodens 21, wo das darüber liegende Sieb 19 das Axialrotors 17 allenfalls schwach geneigt ist. Hinzu kommt eine Rechts-Links-Ungleichverteilung des von dem Sieb 19 herabfallenden Ernteguts, welche durch die Drehung des Axialrotors 17 und das spezifische Dreschverhalten des Ernteguts verursacht ist. Des Weiteren führt eine Hanglage des Mähdreschers 1 zu einer einseitigen Belastung des Rücklaufbodens 1, was mit zunehmenden Reinigungsverlusten einhergeht.

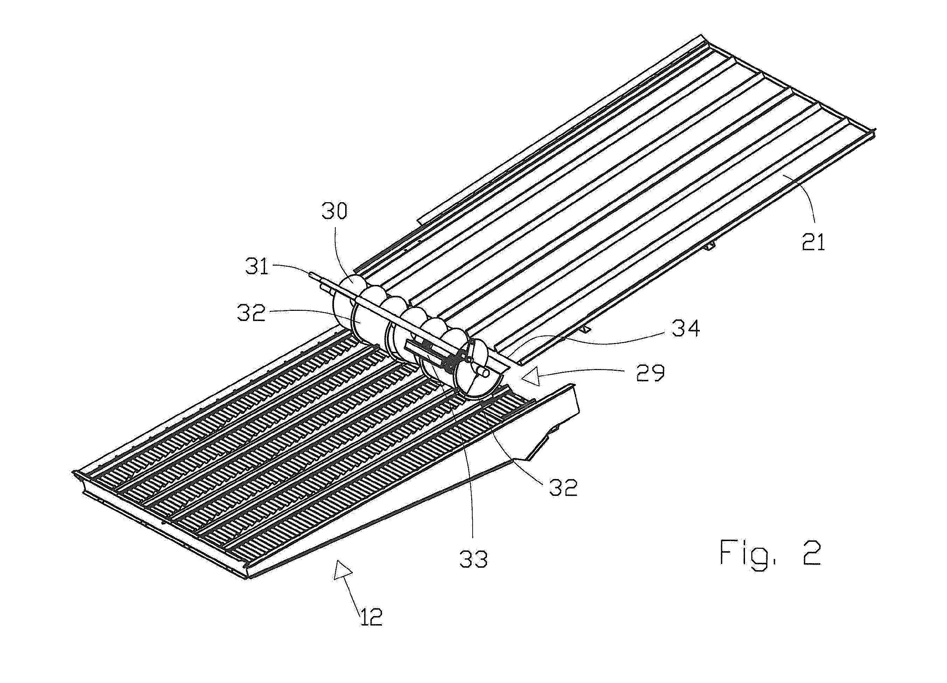

In Fig. 2 ist eine schematisierte, perspektivische Ansicht des Rücklaufbodens 21 sowie des sich daran anschließenden Vorbereitungsbodens 12 dargestellt. In dem Übergangsbereich zwischen dem Rücklaufboden 21 und dem Vorbereitungsboden 12 ist die Fördereinrichtung 29 angeordnet. Das von dem Rücklaufboden 21 an den Vorbereitungsboden 12 zu übergebende Erntegut wird der zwischen diesen angeordneten Fördereinrichtung 29 zugeführt, welche im dargestellten Ausführungsbeispiel als eine Förderschnecke 30 ausgebildet ist. Die Förderschnecke 30 erstreckt sich parallel zur Vorderkante 34 des Rücklaufbodens 21 quer zu der Erntegutflussrichtung. Um beispielsweise bei auftretender Hanglage des Mähdreschers 1 der ungleichmäßigen Beschickung der Reinigungseinrichtung 4 entgegenzuwirken, ist es vorgesehen, dass die Fördermenge des von der Fördereinrichtung 29 verteilten Erntegutes in Abhängigkeit eines die Qualität des Ernteprozesses beeinflussenden Parameters des Mähdreschers 1 veränderbar ist. Beispielsweise kann ein sich bei Hanglage einstellender Seitenneigungswinkel des Mähdreschers 1 als ein die Qualität des Ernteprozesses beeinflussenden Parameter herangezogen werden, der kontinuierlich durch eine Sensorik erfasst wird, um die Fördermenge der Fördereinrichtung 29 zu steuern. Ebenso kann die Steuerung der Fördereinrichtung 29 in Abhängigkeit von sensierten Reinigungsverlusten oder eine durch eine Querverteilungssensorik erfasste Verteilung des der Reinigungseinrichtung 4 zuzuführenden Erntegutes auf dem Rücklaufboden 21 erfolgen. Hierzu sind die Förderrichtung wie auch die Fördergeschwindigkeit der Fördereinrichtung 29 steuerbar, um eine gleichmäßige Beschickung der Reinigungseinrichtung 4 zu erreichen.

Bei einer Steuerung der Fördereinrichtung 29 in Abhängigkeit von der Seitenneigung des Mähdreschers 1 wird das Material von der Fördereinrichtung 29 hangaufwärts gefördert, um der schwerkraftbedingten Ungleichverteilung bei der Übergabe an die Reinigungseinrichtung 4 beziehungsweise den Vorbereitungsboden 12 entgegenzuwirken.

Achsparallel zu der Längsachse der Förderschnecke 30 ist eine Schwenkachse 31 angeordnet, an der zumindest ein positionsveränderbares Leitelement 32 angeordnet ist. Das mindestens eine Leitelement 32 dient dazu, den Ort, an welchem das Erntegut die Förderschnecke 30 verlässt, zu beeinflussen sowie die Förderwirkung der Förderschnecke 30 zu verstärken. In dem in der Fig. 2 dargestellten Ausführungsbeispiel sind zwei axial zueinander beabstandete Leitelemente 32 an der Schwenkachse 31 angeordnet, die im Wesentlichen halbschalenförmig ausgebildet sind und die Förderschnecke 30 abschnittsweise umgeben. Wie weiterhin aus der Darstellung in Fig. 2 ersichtlich ist, ist zumindest an einem der beiden Leitelemente 32 eine Verstelleinrichtung 33, beispielsweise eine hydraulisch betätigbare Zylinder-Kolbenanordnung, vorgesehen, welche die Veränderung der Position des mindestens einen Leitelementes 32 in axialer Richtung gegenüber dem anderen ermöglicht. Die Verstelleinrichtung 33 kann auch elektrisch betätigbar sein.

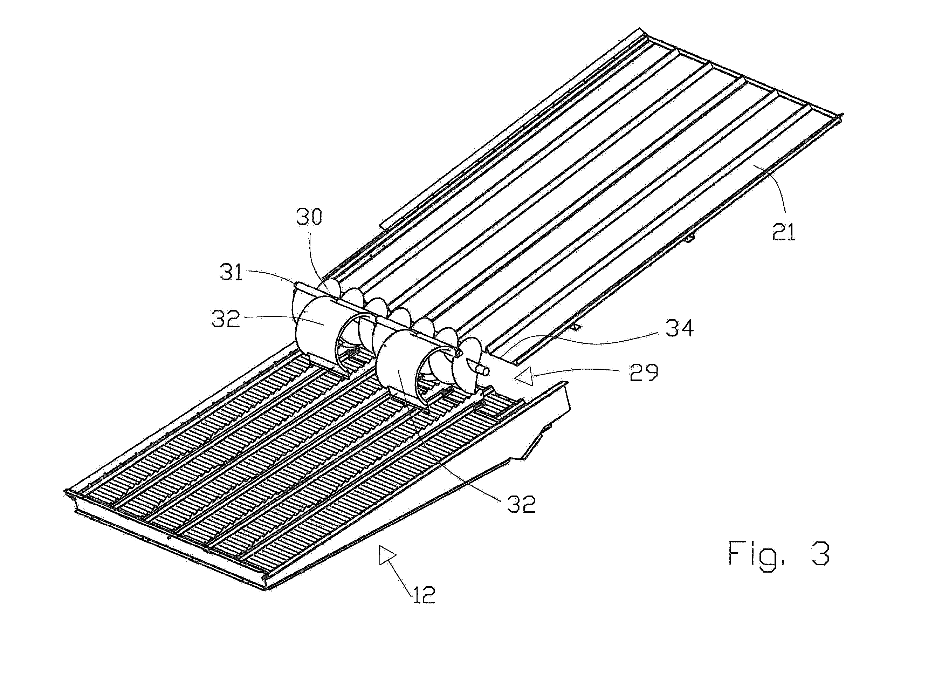

Die Darstellung in Fig. 3 zeigt die Anordnung des Rücklaufbodens 21 sowie des sich daran anschließenden Vorbereitungsbodens 12 gemäß Fig. 2 bei der Fahrt des Mähdreschers 1 in der Ebene. Bei der Fahrt in der Ebene wird das mindestens eine Leitelement 32 in eine radial zu der Förderschnecke 30 beabstandete Position überführt, da es während des Erntevorganges in der Ebene nicht erforderlich ist, den von dem Rücklaufboden 21 an den Vorbereitungsboden 12 abgegebenen Gutstrom in der Form zu vergleichmäßigen, wie es während des Erntevorganges am Hang der Fall ist, so dass das Zusammenwirken des mindestens einen Leitelementes 32 mit der Förderschnecke 30 durch dessen Verschwenken aufgehoben wird. Die mit Bezug auf die Vorderkante 34 ortsfeste Fördereinrichtung 29 respektive Förderschnecke 30 selbst wird während des Erntevorganges in der Ebene weiterhin angetrieben, um ein Anstauen von Erntegut vor der Förderschnecke 30 zu vermeiden. Dies geschieht jedoch mit reduzierter Antriebsdrehzahl der Förderschnecke 30.

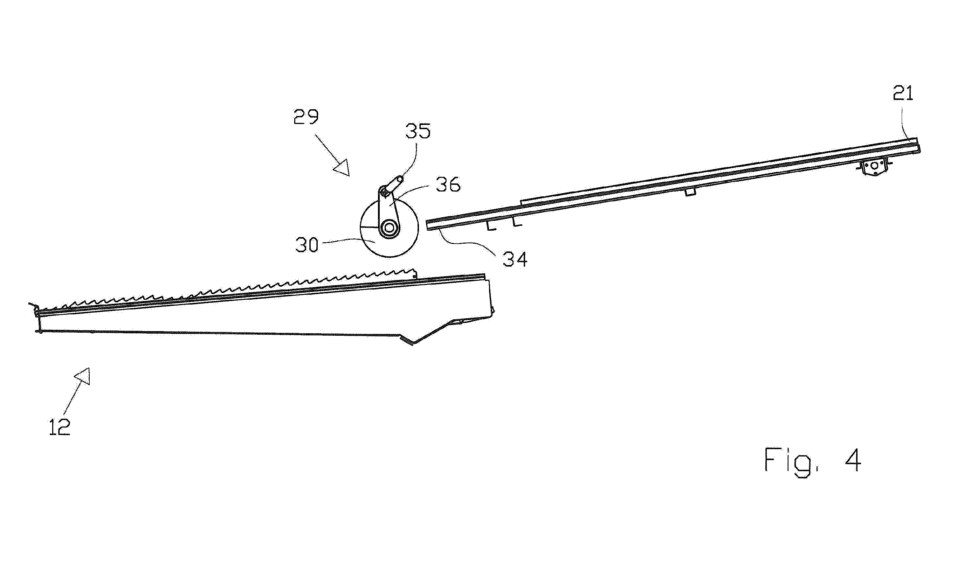

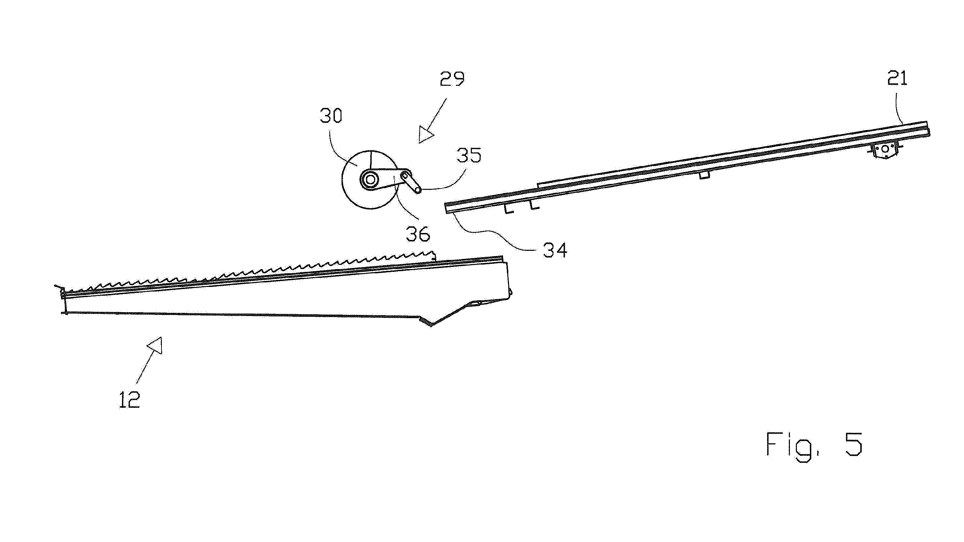

Die Darstellungen in den Fig. 4 und 5 zeigt eine schematisierte Seitenansicht einer zweiten Ausführungsform der Fördereinrichtung 29, die entsprechend der Fahrt eines Mähdreschers 1 in Hanglage (Fig. 4) beziehungsweise in der Ebene (Fig. 5) eingestellt ist. Die als Förderschnecke 30 ausgeführte Fördereinrichtung 29 ist mit beidseitig der Fördereinrichtung 29 angeordneten Hebelanordnungen 36 an einer Schwenkachse 35 schwenkbar angelenkt. Gemäß der Darstellung in der Fig. 4 befindet sich die Fördereinrichtung 29 in einer zu der Vorderkante 34 des Rücklaufbodens 21 parallelen und zu der Vorderkante 34 sowie der Oberfläche des Vorbereitungsbodens 12 geringfügig beabstandeten Position. In dieser Position ist die Beeinflussung des von dem Rücklaufboden 21 kommenden Erntegutes am größten, da sie über die gesamte Breite der Förderschnecke 30 erfolgt.

Die Anlenkung der Fördereinrichtung 29 mit den Hebelanordnungen 36 ermöglicht das Verschwenken der Fördereinrichtung 29 in eine in Fig. 5 dargestellte Endposition, in der die Fördereinrichtung 29 derart zu der Vorderkante 34 beabstandet ist, dass der von dem Rücklaufboden 21 an den Vorbereitungsboden 12 abgegebene Gutstrom nicht beeinflusst wird, was der Fahrt des Mähdreschers 1 in der Ebene entspricht.

Die Förderschnecke 30 lässt sich auf Grund der voneinander unabhängig betätigbaren Hebelanordnungen 36 derart in ihrer Position verändern, dass die Längsachse der Förderschnecke 30 unter einem Winkel zur Vorderkante 34 positioniert ist. Auf diese Weise lässt sich entsprechend der Hanglage des Mähdreschers 1 die Vergleichmäßigung des Erntegutstromes durch die Fördereinrichtung 29 respektive Förderschnecke 30 variieren. So kann das hangaufwärts weisende Ende der Fördereinrichtung 29 einen größeren Abstand zu der Vorderkante 34 des Rücklaufbodens aufweisen, als das hangabwärts weisende Ende der Fördereinrichtung 29.

**Bezugszeichenliste**

| | | | |
|---|---|---|---|
| 1 | Mähdrescher | 22 | Schneckenfördereinrichtung |
| 2 | Schneidwerk | 23 | Kornelevator |
| 3 | Dreschorgane | 24 | rückwärtiges Ende |
| 4 | Reinigungseinrichtung | 25 | Überkehrelevator |
| 5 | Korntank | 26 | Häcksler |
| 6 | Fahrerkabine | | |
| 7 | Verteiler | 29 | Fördereinrichtung |
| 8 | Erntegut | 30 | Förderschnecke |
| 9 | Schrägförderorgan | 31 | Schwenkachse |
| 10 | Dreschtrommel | 32 | Leitelement |
| 11 | Dreschkorb | 33 | Verstelleinrichtung |
| 12 | Vorbereitungsboden | 34 | Vorderkante |
| 13 | Gebläse | 35 | Schwenkachse |
| 14 | Obersieb | 36 | Hebelanordnung |
| 15 | Untersieb | | |
| 16 | Wendetrommel | | |
| 17 | Axialrotor | | |
| 18 | Boden | | |
| 19 | Sieb | | |
| 20 | Schnecke | | |
| 21 | Rücklaufboden | | |

## Patentansprüche

1. Mähdrescher (1) mit einer Abscheidevorrichtung (17) und einer Reinigungseinrichtung (4) sowie einem sich an die Abscheidevorrichtung (17) anschließenden, quer zur Fahrtrichtung erstreckenden Rücklaufboden (21), dem eine Fördereinrichtung (29, 30) zugeordnet ist, welche ein von der Abscheidevorrichtung (17) auf den Rücklaufboden (21) abgegebenes Erntegut vor der Abgabe an die Reinigungseinrichtung (4) quer zur Fahrtrichtung verteilt, wobei die Fördermenge des von der Fördereinrichtung (29, 30) verteilten Erntegutes in Abhängigkeit von Betriebsparametern des Mähdreschers (1), welche die Qualität des Reinigungsprozesses beeinflussen, veränderbar ist, **dadurch gekennzeichnet, dass** die Fördereinrichtung (29, 30) in Abhängigkeit von einem Seitenneigungswinkel des Mähdreschers (1) relativ zu dem Rücklaufboden (21) in Bezug auf eine zu dem Rücklaufboden (21) senkrechte Achse partiell positionsveränderlich angeordnet ist.

2. Mähdrescher (1) nach Anspruch 1, **dadurch gekennzeichnet, dass** die Fördereinrichtung (29, 30) in Bezug auf eine zu dem Rücklauflaufboden (21) parallel verlaufende Achse positionsveränderlich ist.

3. Mähdrescher (1) nach einem der Ansprüche 1 bis 2, **dadurch gekennzeichnet, dass** die Förderrichtung der Fördereinrichtung (29, 30) in Abhängigkeit von dem die Qualität des Reinigungsprozesses beeinflussenden Parameters umkehrbar ist.

4. Mähdrescher (1) nach einem der Ansprüche 1 bis 3, **dadurch gekennzeichnet, dass** die Geschwindigkeit der Fördereinrichtung (29, 30) in Abhängigkeit von dem die Qualität des Reinigungsprozesses beeinflussenden Parameters steuerbar ist.

5. Mähdrescher (1) nach einem der Ansprüche 1 bis 4, **dadurch gekennzeichnet, dass** mindestens ein achsparallel zu der Längsachse der Fördereinrichtung (29, 30) angeordnetes Leitelement (32) die Fördereinrichtung (29, 30) in radialer Richtung abschnittsweise umgibt.

6. Mähdrescher (1) nach Anspruch 5, **dadurch gekennzeichnet, dass** das mindestens eine Leiteelement (32) relativ zu dem Rücklaufboden (21) positionsveränderbar ist.

7. Mähdrescher (1) nach einem der Ansprüche 5 oder 6, **dadurch gekennzeichnet, dass** die Fördereinrichtung (29, 30) von mindestens zwei Leitelementen (32) abschnittsweise umgeben ist, die relativ zueinander verstellbar sind.

8. Mähdrescher (1) nach einem der Ansprüche 1 bis 7, **dadurch gekennzeichnet, dass** die Fördereinrichtung (29) als eine Förderschnecke (30) ausgeführt ist.

9. Mähdrescher (1) nach einem der Ansprüche 1 bis 7, **dadurch gekennzeichnet, dass** die Fördereinrichtung (29) als ein Förderband ausgeführt ist.

## Claims

1. A combine harvester (1) comprising a separating device (17) and a cleaning device (4) as well as a return pan (21) which adjoins the separating device (17) and which extends transversely relative to the direction of travel and with which there is associated a conveyor device (29, 30) which distributes a crop material delivered on to the return pan (21) by the separating device (17) prior to delivery to the cleaning device (4) transversely relative to the direction of travel, wherein the conveyor amount of the crop material distributed by the conveyor device (29) is variable in dependence on operating parameters of the combine harvester (1), that influence the quality of the cleaning process, **characterised in that** the conveyor device (29, 30) is arranged partially variably in position in dependence on a lateral inclination angle of the combine harvester (1) relative to the return pan (21) in relation to an axis perpendicular to the return pan (21).

2. A combine harvester (1) according to claim 1 **characterised in that** the conveyor device (29, 30) is variable in position in relation to an axis extending parallel to the return pan (21).

3. A combine harvester (1) according to one of claims 1 and 2 **characterised in that** the conveyor direction of the conveyor device (29, 30) is reversible in dependence on the parameter influencing the quality of the cleaning process.

4. A combine harvester (1) according to one of claims 1 to 3 **characterised in that** the speed of the conveyor device (29, 30) is controllable in dependence on the parameter influencing the quality of the cleaning process.

5. A combine harvester (1) according to one of claims 1 to 4 **characterised in that** at least one guide element (32) arranged in axis-parallel relationship with the longitudinal axis of the conveyor device (29, 30) portion-wise surrounds the conveyor device (29, 30) in the radial direction.

6. A combine harvester (1) according to claim 5 **characterised in that** the at least one guide element (32) is variable in position relative to the return pan (21).

7. A combine harvester (1) according to one of claims 5 and 6 **characterised in that** the conveyor device (29, 30) is surrounded portion-wise by at least two guide elements (32) which are displaceable relative to each other.

8. A combine harvester (1) according to one of claims 1 to 7 **characterised in that** the conveyor device (29) is in the form of a conveyor screw (30).

9. A combine harvester (1) according to one of claims 1 to 7 **characterised in that** the conveyor device (29) is in the form of a conveyor belt.

## Revendications

1. Moissonneuse-batteuse (1) comprenant un dispositif de séparation (17) et un organe de nettoyage (4) ainsi qu'une table de retour (21) qui se raccorde au dispositif de séparation (17) et s'étend transversalement au sens de marche et à laquelle est associé un organe de transport (29, 30) qui répartit transversalement au sens de marche un produit de récolte remis par le dispositif de séparation (17) à la table de retour (21) avant la remise à l'organe de nettoyage (4), le débit du produit de récolte réparti par l'organe de transport (29, 30) étant modifiable en fonction de paramètres de fonctionnement de la moissonneuse-batteuse (1) influant sur la qualité du processus de nettoyage, **caractérisée en ce que** l'organe de transport (29, 30) est disposé avec un positionnement partiellement variable par rapport à un axe perpendiculaire à la table de retour (21) en fonction d'un angle d'inclinaison latérale de la moissonneuse-batteuse (1) par rapport à la table de retour (21).

2. Moissonneuse-batteuse (1) selon la revendication 1, **caractérisée en ce que** l'organe de transport (29, 30) possède un positionnement variable par rapport à un axe parallèle à la table de retour (21).

3. Moissonneuse-batteuse (1) selon l'une des revendications 1 à 2, **caractérisée en ce que** le sens de transport de l'organe de transport (29, 30) peut être inversé en fonction de paramètres influant sur la qualité du processus de nettoyage.

4. Moissonneuse-batteuse (1) selon l'une des revendications 1 à 3, **caractérisée en ce que** la vitesse de l'organe de transport (29, 30) peut être commandée en fonction de paramètres influant sur la qualité du processus de nettoyage.

5. Moissonneuse-batteuse (1) selon l'une des revendications 1 à 4, **caractérisée en ce qu'**au moins un élément de guidage (32) disposé parallèlement à l'axe longitudinal de l'organe de transport (29, 30) entoure partiellement l'organe de transport (29, 30) en direction radiale.

6. Moissonneuse-batteuse (1) selon la revendication 5, **caractérisée en ce que** ledit au moins un élément de guidage (32) possède un positionnement variable par rapport à la table de retour (21).

7. Moissonneuse-batteuse (1) selon l'une des revendications 5 ou 6, **caractérisée en ce que** l'organe de transport (29, 30) est partiellement entouré par au moins deux éléments de guidage (32) qui sont mobiles l'un par rapport à l'autre.

8. Moissonneuse-batteuse (1) selon l'une des revendications 1 à 7, **caractérisée en ce que** l'organe de transport (29) est réalisé sous la forme d'une vis de transport (30).

9. Moissonneuse-batteuse (1) selon l'une des revendications 1 à 7, **caractérisée en ce que** l'organe de transport (29) est réalisé sous la forme d'une bande transporteuse.
